# EUROPÄISCHE PATENTANMELDUNG

(11) **EP 3 070 614 A1**
(43) Veröffentlichungstag der Anmeldung: **21.09.2016**
(21) Anmeldenummer: 15159433.0
(22) Anmeldetag: 17.03.2015
(51) Int. Cl.: G06F 13/40, G06F 13/42

(54) **Feldbussystem und Verfahren zur Konfiguration**

(71) Anmelder: Siemens Aktiengesellschaft, 80333 München (DE)
(72) Erfinder: Pohle, Michael, 09125 Chemnitz (DE)

(57) **Zusammenfassung**

Die Erfindung betrifft ein Feldbussystem (100), umfassend
- einen Datenbuskoppler (1) mit einem Primär-Busanschluss (P) für einen Primär-Bus (2) und einer Mehrzahl von Sekundär-Busanschlüssen (S1,S2,..,S_{N}) für den Anschluss je eines Endgerätes (F1,F2,..,F_{N}),
- mindestens ein angeschlossenes Endgerät (F1),
- eine an den Primär-Bus (2) angeschlossene Station (101) zur Konfiguration und zur Inbetriebnahme des Feldbussystems (100),
wobei der Datenbuskoppler (1) eine Abfrageeinheit (40) aufweist, welche ausgestaltet ist zu den an den Sekundär-Busanschlüssen (S1,S2,..,S_{N}) angeschlossenen Endgeräten (F1,F2,..,F_{N}) eine Abfrageverbindung (C2) aufzubauen und mittels eines Abfragebefehls (RQ), welcher einen Selektionsparameter (50) aufweist, zumindest ein erstes Geräteprofil (51,52,53,54) eines an den Sekundär-Busanschluss (S1,S2,..,S_{N}) angeschlossenen Endgerätes (F1,F2,..,F_{N}) abzufragen und in einem Speicherbaustein (41) auf dem Datenbuskoppler (1) abzuspeichern.

## Beschreibung

Die Erfindung betrifft ein Feldbussystem, umfassend einen Datenbuskoppler mit einem Primär-Busanschluss für einen Primär-Bus und einer Mehrzahl von Sekundär-Busanschlüssen für den Anschluss je eines Endgerätes, mindestens ein angeschlossenes Endgerät, eine an den Primär-Bus angeschlossene Station zur Konfiguration und zur Inbetriebnahme des Feldbussystems.

Es ist Aufgabe der vorliegenden Erfindung eine Konfiguration eines Feldbussystems zu erleichtern.

Die Aufgabe wird durch das eingangs genannte Feldbussystem dadurch gelöst, dass der Datenbuskoppler eine Abfrageeinheit aufweist, welche ausgestaltet ist zu den an den Sekundär-Busanschlüssen angeschlossenen Endgeräten eine Abfrageverbindung aufzubauen und mittels eines Abfragebefehls, welche einen Selektionsparameter aufweist, zumindest ein erstes Geräteprofil eines an den Sekundär-Busanschluss angeschlossenen Endgerätes abzufragen und in einem Speicherbaustein auf den Datenbuskoppler abzuspeichern. Durch das genannte Feldbussystem, insbesondere durch den Datenbuskoppler, erfolgt eine automatische, projektierungsfreie Erkundung der angeschlossenen Endgeräte bzw. ganzer Feldbussegmente und eine daran anschließende Feldbusinstallation.

Weiterführend ist die Abfrageeinheit ausgestaltet, den Selektionsparameter zu inkrementieren und mit den derart veränderten Selektionsparameter einen erneuten Abfragebefehl an das Endgerät zu richten um ein möglicherweise vorhandenes zweites Geräteprofil des Endgerätes zu erhalten, weiterhin ausgestaltet für den Fall, dass ein zweites Geräteprofil vorhanden ist auch dieses in den Speicherbaustein zu speichern, wobei der Selektionsparameter solange inkrementiert und ein erneuter Abfragebefehl an das Endgerät gerichtet wird, bis eine Antwort auf den Abfragebefehl ergibt, dass kein weiteres Geräteprofil in dem Endgerät eingetragen ist.

In einer weiteren Ausgestaltung ist die Abfrageeinheit weiterhin ausgestaltet, eine Versionsnummer aus dem Endgerät auszulesen und in Abhängigkeit von der Versionsnummer einen Eintrag in den Speicherbaustein hinsichtlich einer Geräteprofil-Version-Unterstützung anzulegen.

Die Station zur Konfiguration und zur Inbetriebnahme des Feldbussystems weist eine aktuelle Bibliothek von möglichen Geräteprofilen auf, wobei die Station weiterhin ausgestaltet ist, den Inhalt des Speicherbausteins zu kopieren und anhand der Information aus den Speicherbaustein und der Information aus der Bibliothek in einem Konfigurationseditor der Station ein Symbol des jeweiligen Endgerätes zu erstellen, wobei dem Symbol ein Auswahlmenue zugeordnet ist, in welchem ein Anwender aus den das Endgerät unterstützenden Geräteprofilen wählen kann.

Hierbei ist es im Hinblick auf eine vereinfachte Inbetriebnahme von Vorteil, dass dem Anwender in dem Auswahlmenü nur noch die Geräteprofile angezeigt werden, welche das jeweilige Endgerät auch beherrscht. Eine Suche durch den Anwender in Handbüchern/Datenblättern der Endgeräte nach dem Eintrag, welche Geräteprofile das jeweilige Endgerät unterstützt, wird überflüssig.

Beispielsweise gibt es nach dem derzeitigen Kenntnisstand zwölf "Hersteller- und Geräteneutrale" Profildateien. Damit in dem Auswahlmenü nicht immer alle 12 Profile angezeigt werden, wird nun anhand der Information aus dem Endgerät nur eine Untermenge der derzeit überhaupt möglichen Profile, nämlich nur die vom Endgerät unterstützten, angezeigt.

Um einem Anwender die Projektierung des Feldbussystems weiter zu erleichtern, weist das Feldbussystem einen für eine automatische Adressvergabe weiterentwickelten Datenbuskoppler auf. Eine Adressvergabe für die Endgeräte könnte auch umständlich manuell erfolgt sein, aber im Hinblick auf eine zusätzliche Erleichterung kann dies auch der Datenbuskoppler übernehmen.

Dazu weist der Datenbuskoppler folgendes auf, eine Slaveeinheit, welche mit dem Primär-Busanschluss in Verbindung steht und eine Master-Einheit, welche an die Sekundär-Busanschlüsse anschaltbar ist und welche ausgestaltet ist an die Sekundär-Busanschlüsse Telegramme abzusetzen, eine Steuereinheit, ein Kommunikations-Schaltmittel pro Sekundär-Busanschluss, welche den jeweiligen Sekundär-Busanschluss mit der Master-Einheit verbindet oder von der Master-Einheit trennt, wobei die Steuereinheit ausgestaltet ist, die Kommunikationsschaltmittel bezüglich des Verbindens oder des Trennens zu steuern, wobei die Steuereinheit einen Befehlsausgang aufweist und ausgestaltet ist, über den Befehlsausgang der Master-Einheit eine geplante Anfrage der Steuereinheit an einen bestimmbaren Sekundär-Busanschluss mitzuteilen, wobei die Steuereinheit weiterhin einen Telegramm-Auswerteeingang aufweist, welcher mit der Master-Einheit verbunden ist und die Steuereinheit ausgestaltet ist, die von der Master-Einheit abgesetzten Telegramme mitzulesen und die Telegramme auf die geplante Anfrage hin zu untersuchen, weiterhin ist die Steuereinheit ausgestaltet zu dem Zeitpunkt des Absendens der Anfrage durch die Master-Einheit die Kommunikations-Schaltmittel zu steuern. Das Merkmal zu dem Zeitpunkt des Absendens, ist nicht zu streng zu sehen, es kann auch kurz vor oder während oder kurz nach dem Absenden steuernd eingegriffen werden.

Demnach ist es in einer weiterführenden Ausgestaltung des Datenbuskoppler in Bezug auf definierte Adressprüfungen oder Adressanfragen von einzelnen an die Sekundär-Busanschlüsse angeschlossenen Endgeräten von Vorteil, dass die Steuereinheit weiterhin ausgestaltet ist, dass die zum angefragten Sekundär-Busanschluss zugehörigen Kommunikations-Schaltmittel, derart gesteuert werden, dass es den in der Anfrage bestimmten zugehörigen Sekundär-Busanschluss an die Master-Einheit anschaltet und die übrigen Kommunikations-Schaltmittel derart steuert, dass die Master-Einheit von den in der Anfrage nicht bestimmten Sekundär-Busanschlüssen getrennt werden.

Weiterhin ist es von Vorteil, dass der Datenbuskoppler pro Sekundär-Busanschluss ein Versorgungsschaltmittel aufweist, wobei die Steuereinheit weiterhin ausgestaltet ist, die Versorgungsschaltmittel derart zu steuern, dass eine Versorgungsspannung an die Sekundär-Busanschlüsse einzeln anschaltbar ist.

Weiterhin ist es von Vorteil, wenn der Datenbuskoppler eine Diagnoseeinheit aufweist, welche mit der Steuereinheit in Verbindung steht und ausgestaltet ist ein Anschließen eines Endgerätes an einen Sekundär-Busanschluss zu erkennen, wobei die Steuereinheit dazu ausgestaltet ist, vor einem möglichen Erkennen alle Versorgungs-Schaltmittel so zu steuern, dass die Versorgungsspannung an die Sekundär-Busanschlüsse angeschaltet ist.

Wird beispielsweise bei einer Konfigurationsänderung während des Betriebes (CiR, Configuration Change in Run) ein Teilnehmer von dem Datenbuskoppler getrennt, so wird diese Trennung durch die Diagnoseeinheit registriert. Daraufhin informiert die Diagnoseeinheit die Steuereinheit, welche daraufhin das zugehörige Kommunikations-Schaltmittel des Sekundär-Busanschlusses von welchem das Endgerät getrennt wurde, von der Master-Einheit wegschaltet um zusätzliche Störungen zu vermeiden.

Im Gegensatz zum Trennen eines Endgerätes wird, wenn ein Endgerät an einen Sekundär-Bus angeschlossen wird, die Diagnoseeinheit dies aufgrund von einem zusätzlichen Energieverbrauch registrieren, wobei die Diagnoseeinheit wiederum über den zusätzlich angeschalteten Teilnehmer die Steuereinheit informiert. Das zusätzlich angeschaltete Endgerät ist nun zwar mit einer Versorgungsspannung versorgt, aber die KommunikationsSchaltmittel des zusätzlich angeschalteten Endgerätes haben aufgrund der Steuerung durch die Steuereinheit das zusätzlich angeschaltete Endgerät noch nicht mit der Master-Einheit verbunden um Kommunikationsstörungen zu vermeiden. Dieses zusätzlich hinzugefügte Endgerät würde bei einem nächsten Überprüfungslauf durch den Datenbuskoppler, wobei sequentiell alle Kommunikations-Schaltmittel derart gesteuert werden, dass jeweils ein Teilnehmer auf seine gültige Adresse hin überprüft wird, auch überprüft werden und gegebenenfalls würde ihm eine passende Adresse vergeben werden, wodurch er anschließend in den normalen Kommunikationsbetrieb mit aufgenommen werden kann. Demnach ermöglicht der Datenbuskoppler ein Endgerätewechsel oder das Hinzufügen von Endgeräten, da ausgetauschte oder hinzugefügte Endgeräte einfach nur angeschlossen werden müssen und von dem Datenbuskoppler quasi in einem Scan-Lauf automatisch erkannt werden und dabei konfliktfrei ihre Busadresse erhalten.

Dazu ist es auch vorteilhaft, wenn die Diagnose-Einheit weiterhin dazu ausgestaltet ist, ein Trennen eines Endgerätes von einem Sekundär-Busanschluss zu erkennen, wobei die Steuereinheit dazu ausgestaltet ist, quasi zeitgleich, die zugehörigen Kommunikations-Schaltmittel derart zu steuern, dass die Master-Einheit von den zugehörigen Sekundär-Busanschlüssen getrennt ist. Ein Trennen erkennt die Diagnoseeinheit beispielsweise aufgrund einer Drahtbruchprüfung.

Um die Konfiguration und die anschließende Inbetriebnahme des Feldbussystems zu erleichtern, wird die eingangs genannte Aufgabe ebenfalls durch ein Verfahren zur Konfiguration zur Inbetriebnahme eines Feldbussystems nach einem der Ansprüche 1 bis 9 dadurch gelöst, dass in dem Datenbuskoppler eine Abfrageeinheit betrieben wird, dass zu den an den Sekundär-Busanschlüssen angeschlossenen Endgeräten eine Abfrageverbindung aufbaut und mittels eines Abfragebefehls, welche einen Selektionsparameter aufweist, zumindest ein erstes Geräteprofil eines an den Sekundär-Busanschluss angeschlossenen Endgerätes abfragt und in einem Speicherbaustein auf den Datenbuskoppler abspeichert.

Für den Fall dass ein Endgerät mehrere Geräteprofile aufweist, wird durch die Abfrageeinheit der Selektionsparameter inkrementiert und mit dem derart veränderten Selektionsparameter wird ein erneuter Abfragebefehl an das Endgerät gerichtet, um ein möglicherweise vorhandenes zweite Geräteprofil des Endgerätes zu erhalten, weiterhin wird durch die Abfrageeinheit für den Fall, dass ein zweites Geräteprofil vorhanden ist auch dieses in dem Speicherbaustein gespeichert, wobei der Selektionsparameter solange inkrementiert und ein erneuter Abfragebefehl an das Endgerät gerichtet wird, bis eine Antwort auf den Abfragebefehl ergibt, dass kein weiteres Geräteprofil in dem Endgerät eingetragen ist.

In der Station wird eine aktuelle Bibliothek von möglichen Geräteprofilen vorgehalten, wobei von der Station aus der Inhalt des Speicherbausteins kopiert wird und anhand der Informationen aus dem Speicherbaustein und der Information aus der Bibliothek in einem Konfigurationseditor der Station ein Symbol des jeweiligen Endgerätes erstellt wird, wobei dem Symbol ein Auswahlmenü zugeordnet wird, in welchen ein Anwender aus den das Endgerät unterstützenden Geräteprofilen wählen kann.

Anhand der Zeichnung, in der ein Ausführungsbeispiel der Erfindung veranschaulicht ist, werden im Folgenden die Erfindung, deren Ausgestaltung sowie Vorteile näher erläutert. Es zeigt die
- FIG 1: einen Datenbuskoppler und die
- FIG 2: ein Feldbussystem.

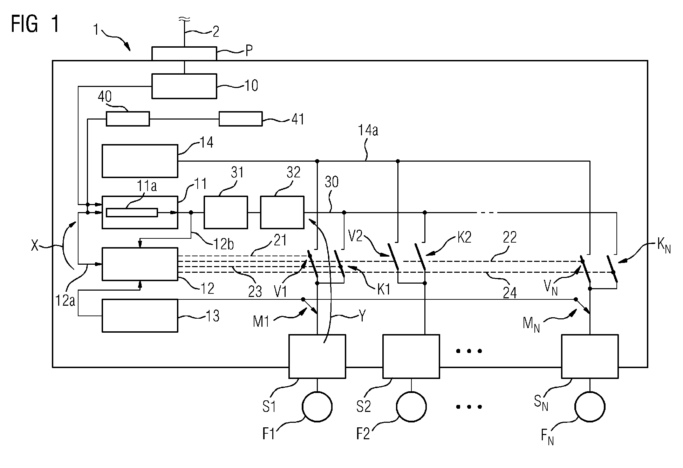

Als Vorbereitung für eine automatische Ermittlung von unterstützenden Geräteprofilen von Endgeräten F1,..,F_{N} wird mit der FIG 1 ein Datenbuskoppler vorgestellt, welcher den Endgeräten F1,..,F_{N} automatisch Adressen zuweist.

Eine automatische Adressvergabe ist nicht zwingend erforderlich, kann aber optional vor der Ermittlung von Geräteprofilen automatisiert ablaufen.

Die Adressen können im Hinblick auf die Ermittlung der Geräteprofile auch vorher manuell vergeben worden sein.

Gemäß der FIG 1 ist der Datenbuskoppler 1 mit einem Primär-Busanschluss P für den Anschluss an einen Primär-Bus 2 und einer Mehrzahl von Sekundär-Busanschlüssen S1,S2,..,S_{N} für den Anschluss je eines Endgerätes F1,F2,..,F_{N} dargestellt.

Der Datenbuskoppler 1 kann beispielsweise in der Automatisierungstechnik als Datenbuskoppler 1 zwischen einem überlagerten Profibus DP-Bus und einem unterlagerten Profibus PA-Bus eingesetzt werden.

Für die Kommunikation zwischen dem überlagerten Bus und dem unterlagerten Bus weist der Datenbuskoppler 1 eine Slave-Einheit 10 auf, welche mit dem Primär-Busanschluss P in Verbindung steht, und eine Master-Einheit 11, welche an die Sekundär-Busanschlüsse S1,S2,..,S_{N} anschaltbar ist und welche ausgestaltet ist, an die Sekundär-Busanschlüsse S1,S2,..,S_{N} Telegramme abzusetzen.

Die Slave-Einheit 10 ist über eine Datenleitung mit der Master-Einheit 11 verbunden und kann dadurch Telegramme des Primär-Busses 2 an die Master-Einheit 11 weitergeben. Die Master-Einheit 11 ist wiederum mit einem Segmentkoppler 31 verbunden, wobei der Segmentkoppler 31 wiederum mit einem Konverter 32 verbunden ist. Nach dem Konverter 32 folgt eine interne Busleitung 30 des Datenbuskopplers 1. An diese interne Busleitung 30 werden über Kommunikations-Schaltmittel K1,K2,..,K_{N} entsprechende Sekundär-Busanschlüsse S1,S2,..,S_{N} angeschaltet. Demnach ist der erste Sekundär-Busanschluss S1 über ein erstes Kommunikations-Schaltmittel K1 mit der internen Busleitung 30 verbindbar, der zweite Sekundär-Busanschluss S2 ist über ein zweites Kommunikations-Schaltmittel K2 mit der internen Busleitung 30 verbindbar und ein n-ter Busanschluss S_{N} ist über ein n-tes Kommunikations-Schaltmittel K_{N} mit der internen Busleitung 30 verbindbar.

An die Sekundär-Busanschlüsse S1,S2,..,S_{N} ist jeweils über einen Feldbusstrang ein Endgerät F1,F2,..,F_{N} angeschlossen.

Um die Kommunikations-Schaltmittel K1,K2,..,K_{N} entsprechend zu steuern, weist der Datenbuskoppler 1 eine Steuereinheit 12 auf. Die Steuereinheit 12 steuert die Kommunikations-Schaltmittel K1,K2,..,K_{N} derart, dass der jeweilige Sekundär-Busanschluss S1,S2,..,S_{N} mit der Master-Einheit 11 verbunden wird oder von der Master-Einheit 11 getrennt wird.

Um das Steuern der Kommunikations-Schaltmittel K1,K2,..,K_{N} bezüglich des Verbindens oder des Trennens zu steuern, weist die Steuereinheit 12 weiterhin einen Befehlsausgang 12a auf und ist ausgestaltet, über den Befehlsausgang 12a der Master-Einheit 11 eine geplante Anfrage X der Steuereinheit 12 an einen bestimmbaren Sekundär-Busanschluss S1,S2,..,S_{N} mitzuteilen, wobei die Steuereinheit 12 weiterhin einen Telegrammauswerte-Eingang 12b aufweist. Dieser Telegrammauswerte-Eingang 12b ist mit der Master-Einheit 11 verbunden und die Steuereinheit 12 ist ausgestaltet die von der Master-Einheit 11 abgesetzten Telegramme mitzulesen und die Telegramme auf die geplante Anfrage X hin zu untersuchen, wobei weiterhin die Steuereinheit 12 ausgestaltet ist, zu dem Zeitpunkt des Absendens der Anfrage X durch die Master-Einheit 11 die Kommunikations-Schaltmittel K1,K2,..,K_{N} entsprechend zu steuern.

Ein Anwender braucht sich demnach nicht mehr um eine Busadressvergabe bei der Inbetriebnahme von beispielsweise Profibus-PA bzw. Foundation Feldbus-H1 Feldbussegmenten zu kümmern, eine Busadress-Vergabe bzw. eine Prüfung von Busadressen bzw. ein Erkennen von neu hinzugeschalteten Geräten erfolgt völlig automatisch und dabei konfliktfrei durch den Datenbuskoppler 1. Damit dieses nicht nur bei einer Erstinbetriebnahme sondern auch im laufenden Betrieb erfolgen kann, ist die Steuereinheit 12 dazu ausgestaltet, die zum angefragten Sekundär-Busanschluss S1,S2,..,S_{N} zugehörigen Kommunikations-Schaltmittel K1,K2,..,K_{N} derart zu steuern, dass es den in der Anfrage X bestimmten zugehörigen Sekundär-Busanschluss S1,S2,..,S_{N} an die Master-Einheit 11 anschaltet und die übrigen Kommunikations-Schaltmittel K1,K2,..,K_{N} derart steuert, dass die Master-Einheit 11 von den in der Anfrage X nicht bestimmten Sekundär-Busanschlüssen S1,S2,..,S_{N} getrennt wird.

Für das An- und Abschalten einer Versorgungsspannung zu den Endgeräten F1,F2,..,F_{N} weist der Datenbuskoppler 1 intern eine Versorgungsleitung 14a auf. Über Versorgungs-Schaltmittel V1,V2,..,V_{N} jeweils eins pro Sekundär-Busanschluss S1,S2,..,S_{N} kann eine Versorgungsspannung an die Sekundär-Busanschlüsse S1,S2,..,S_{N} einzeln angeschaltet werden. Die Steuereinheit 12 ist dabei weiterhin dazu ausgestaltet, die Versorgungs-Schaltmittel V1,V2,..,V_{N} dementsprechend zu steuern.

Mit der Steuerung der Vorsorgungs-Schaltmittel V1,V2,..,V_{N} wird vor einer Anfrage an einen bestimmten Sekundär- Busanschluss S1,S2,..,S_{N} zunächst die jeweilige Versorgungsspannung an den anzufragenden Sekundär-Busanschluss S1,S2,..,S_{N} um ein möglicherweise mit dem Sekundär-Busanschluss S1,S2,..,S_{N} verbundenes Endgerät F1,F2,..,F_{N} mit einer Versorgungsspannung zu versorgen.

Die Steuereinheit 12 weist zum Steuern der Versorgungs-Schaltmittel V1,V2,..,V_{N} und zum Steuern der Kommunikations-Schaltmittel K1,K2,..,K_{N} eine erste Steuerleitung 21, eine zweite Steuerleitung 22, eine dritte Steuerleitung 23 und eine vierte Steuerleitung 24 auf, wobei aus Gründen der Übersichtlichkeit hier nur die erste Steuerleitung 21 zum Steuern des ersten Versorgungs-Schaltmittels V1, die zweite Steuerleitung 22 zum Steuern des n-ten Versorgungs-Schaltmittels V_{N} dargestellt ist. Ebenso sind die dritte Steuerleitung 23 und die vierte Steuerleitung 24 zum Steuern des ersten Kommunikations-Schaltmittels K1 bzw. zum Steuern des n-ten Kommunikations-Schaltmittels K_{N} dargestellt.

Für eine Diagnose weist der Datenbuskoppler 1 eine Diagnoseeinheit 13 auf, welche mit der Steuereinheit 12 in Verbindung steht und ausgestaltet ist, ein Anschließen eines Endgerätes F1,F2,..,F_{N} an einen Sekundär-Busanschluss S1,S2,..,S_{N} zu erkennen, wobei die Steuereinheit 12 weiterhin dazu ausgestaltet ist vor einem möglichen Erkennen alle Versorgungs-Schaltmittel V1,V2,..,V_{N} so zu steuern, dass die Versorgungsspannung an die Sekundär-Busanschlüsse S1,S2,..,S_{N} angeschaltet ist. Weiterhin ist die Diagnoseeinheit 13 dazu ausgestaltet, ein Trennen eines Endgerätes F1,F2,..,F_{N} von einem Sekundär-Busanschluss S1,S2,..,S_{N} zu erkennen, wobei die Steuereinheit 12 dazu ausgestaltet ist, quasi zeitgleich die zugehörigen Kommunikations-Schaltmittel K1,K2,..,K_{N} derart zu steuern, dass die Master-Einheit 11 von den zugehörigen Sekundär-Busanschlüssen S1,S2,..,S_{N} getrennt ist.

Für die Realisierung der Diagnose weisen die Sekundär-Busanschlüsse S1,S2,..,S_{N} Messpunkte M1,M2,..,M_{N} auf.

Im Hinblick auf eine automatische Adressvergabe wird der Datenbuskoppler 1 wie folgt betrieben, ausgehend von einem an einen Sekundär-Busanschluss S1,S2,..,S_{N} angeschlossenen Endgerät F1 wird in der Steuereinheit 12 eine Anfrage X für dieses Endgerät generiert, diese Anfrage X wird an die Master-Einheit 11 übermittelt und in eine Warteschlange 11a eingereiht, zeitgleich wird von der Steuereinheit 12 der von der Master-Einheit 11 ausgesendete Telegrammverkehr überwacht und die abgesetzten Telegramme werden auf das Erscheinen der Anfrage X überprüft, wobei die Anfrage X auf einen bestimmten Sekundär-Busanschluss S1 gerichtet wird und weiterhin enthält die Anfrage X eine erste vermutete Adresse des an den Sekundär-Busanschluss S1 angeschlossenen Endgerätes F1. Ergibt die Überwachung, dass als nächstes auf die interne Busleitung 30 die Anfrage X von der Master-Einheit 11 an den Sekundär-Busanschluss S1 bzw. das daran angeschlossene erste Endgerät F1 ausgesendet wird, so steuert die Steuereinheit 12 das erste Kommunikations-Schaltmittel K1 derart, dass der erste Sekundär-Busanschluss S1 an die Master-Einheit 11 angeschaltet wird und die übrigen Sekundär-Busanschlüsse S2,..,S_{N} von der Master-Einheit 11 getrennt werden.

Eine bevorzugte Steuerung der Kommunikationsschaltmittel sieht vor, das alle Kommunikations-Schaltmittel K1,..,K_{N} an die Mastereinheit 11 angeschaltet sind und wenn während einer Übertragung eines Telegramms erkannt wird, dass es die Anfrage X ist, werden die Kommunikations-Schaltmittel K2,..,K_{N} von der Mastereinheit getrennt und das Kommunikations-Schaltmittel K1 bleibt angeschaltet.

Beispielsweise wird erst nach der Übertragung von den ersten 2-Byte eines Telegramms erkannt, dass es sich um die Anfrage X handelt, und würden daraufhin die Kommunikations-Schaltmittel K1,..,K_{N} abgeschaltet. Jetzt wurden aber bereits 2-Byte an die Endgeräte F2,..,F_{N} übermittelt und mitten in der Übertragung reist die Verbindung ab. Die Endgeräte F2,..,F_{N} erhalten somit nicht das ganze Telegramm bzw. die Anfrage X und verwerfen das teilweise empfangene Telegramm als ungültig. Damit ist sichergestellt, dass die nicht betroffenen Endgeräte F2,..,F_{N} das Telegramm bzw. die Anfrage X nicht erhalten.

Es wird in einem ersten Anfrageversuch die Anfrage X zunächst auf den ersten Sekundär-Busanschluss S1 bzw. auf das an ihn angeschlossene erste Endgerät F1 gerichtet. Dabei enthält die Anfrage X eine Adresse mit dem Wert entsprechend einer Wertigkeit, welche der Sekundär-Busanschluss S1 bzw. das erste Endgerät F1 durch seine Position an den Datenbuskoppler 1 hat, demnach ist die erste Adresse mit der Wertigkeit 1 belegt. Nun wird auf eine Antwort Y von dem ersten Endgerät F1 gewartet und für den Fall, dass innerhalb einer vorgegebenen Zeitspanne keine Antwort Y von dem ersten Endgerät F1 von der Master-Einheit 11 empfangen wird, wird ein zweiter Anfrageversuch mit einer Adresse dem Wert entsprechend eines Default-Wertes (126) durchgeführt.

Nach der Anfrage mit dem Defaultwert 126 erfolgen weitere Anfrageversuche bis der gesamte Wertebereich von möglichen Adressen, welche abhängig vom Einsatz vom PROFIBUS-PA oder FF ist, erforscht wurde.

Für den Fall, dass innerhalb der vorgegebenen Zeitspanne eine Antwort Y des ersten Endgerätes F1 von der Master-Einheit 11 empfangen wurde, wird die in der letzten Anfrage X enthaltene Adresse als gültig für diesen Sekundär-Busanschluss S1 bzw. für den daran angeschlossenen ersten Teilnehmer F1 übernommen.

Für den Fall, dass für alle bisher durchgeführten Anfragen X keine Antwort Y erhalten werden konnte, wird eine Fehlermeldung ausgegeben.

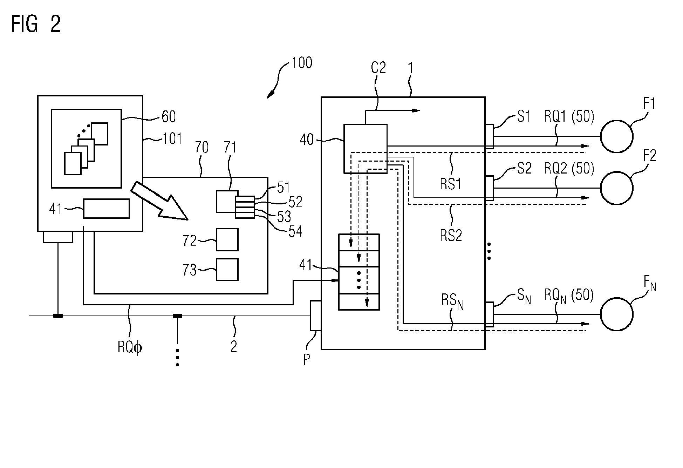

Gemäß der FIG 2 ist ein Feldbussystem 100, umfassend den Datenbuskoppler 1 dargestellt. Der Datenbuskoppler 1 weist eine Abfrageeinheit 40 auf, welche ausgestaltet ist, zu den an den Sekundär-Busanschlüssen S1,S2,..,S_{N} angeschlossenen Endgeräten F1,F2,..,F_{N} eine Abfrageverbindung C2 aufzubauen und mittels eines Abfragebefehls RQ, welcher einen Selektionsparameter 50 aufweist, zumindest ein erstes Geräteprofil 51,52,53,54 eines an den Sekundär-Busanschluss S1,S2,..,S_{N} des angeschlossenen Endgerätes F1,F2,..,F_{N} abzufragen und in einem Speicherbaustein 41 auf dem Datenbuskoppler 1 abzuspeichern. Die Abfrageeinheit 40 richtet nacheinander Abfragebefehle RQ1(50),RQ2(50),..,RQ_{N}(50) an die unterschiedlichen Feldgeräte.

Die Abfrageeinheit 40 ist weiterhin ausgestaltet, den Selektionsparameter 50 zu inkrementieren und mit dem derart veränderten Selektionsparameter 50 einen erneuten Abfragebefehl RQ an das Endgerät F1,F2,..,F_{N} zu richten um ein möglicherweise vorhandenes zweites Geräteprofil 51,52,53,54 des Endgerätes F1,F2,..,F_{N} zu erhalten, weiterhin ausgestaltet für den Fall, dass ein zweites Geräteprofil vorhanden ist auch dieses in den Speicherbaustein 41 zu speichern, wobei der Selektionsparameter 50 solange inkrementiert wird und ein erneuter Abfragebefehl an das Endgerät F1,F2,..,F_{N} gerichtet wird, bis eine Antwort RS auf den Abfragebefehl RQ ergibt, dass kein weiteres Geräteprofil 51,52,53,54 sich in dem Endgerät F1,F2,..,F_{N} eingetragen ist.

Die abgefragten Geräteprofile werden nacheinander den Endgeräten F1,F2,..,F_{N} zugeordnet und in dem Speicherbaustein 41 abgelegt. Eine Station 101 zur Konfiguration und zur Inbetriebnahme des Feldbussystems 100 weist eine aktuelle Bibliothek 60 von möglichen Endgeräten auf, wobei die Station 101 weiterhin ausgestaltet ist, den Inhalt des Speicherbausteins 41 zu kopieren und anhand der Informationen aus dem Speicherbaustein 41 und der Information aus der Bibliothek 60 in einen Konfigurationseditor 70 der Station 101 ein Symbol 71,72,73 des jeweiligen Endgerätes F1,F2,..,F_{N} zu erstellen, wobei dem Symbol 71,72,73 ein Auswahlmenü zugeordnet ist, in welchem ein Anwender aus den möglicherweise mehreren Geräteprofilen wählen kann.

So wird beispielsweise dem ersten Endgerät F1 ein erstes Symbol 71 dem zweiten Endgerät F2 ein zweites Symbol 72 und dem n-ten Endgerät F_{N} ein drittes Symbol 73 in dem Konfigurationseditor 70 zugeordnet und dargestellt.

Das erste Symbol 71, welches symbolisch das erste Endgerät F1 darstellt, weist ein Auswahlmenü mit einem ersten Geräteprofil 51, einem zweiten Geräteprofil 52, einem dritten Geräteprofil 53 und einem vierten Geräteprofil 54 auf. Ein Anwender kann nun aus den aufgezeigten Geräteprofilen, beispielsweise acht digitale Ausgänge für ein erstes Geräteprofil, vier digitale Ausgänge und vier digitale Eingänge für ein zweites Geräteprofil, acht analoge Eingänge für ein viertes Geräteprofil oder acht analoge Ausgänge für ein weiteres Geräteprofil wählen. Durch einfache Auswahl aus dem Menü der Geräteprofile und Anklicken des entsprechenden Menüpunktes ist das entsprechende Endgerät in dem Feldbussystem 100 automatisch konfiguriert.

Damit die Station 101 über einen Hauptabfragebefehl RQ0 die Geräteprofile aus dem Speicherbaustein 41 des Datenbuskopplers 1 kopieren kann, ist die Station 101 mit einem Feldbus 2 an den Primär-Busanschluss P des Datenbuskopplers 1 angeschlossen.

Erfindungsgemäß und im Hinblick auf eine einfache Inbetriebnahme braucht sich der Anwender generell nicht mehr an die Ermittlung der von bereits angeschlossenen oder hinzugefügten Endgeräten unterstützten Profile zu kümmern, sie werden nun völlig automatisch durch den Datenbuskoppler 1 ermittelt und einem Engineeringsystem bzw. der Station 101 zur Verfügung gestellt, so dass der Anwender konfliktfrei nur noch aus den tatsächlich unterstützten Profilen wählen kann, die der Datenbuskoppler 1 in seinem Speicherbaustein 41 ermittelt hat.

## Patentansprüche

1. Feldbussystem (100), umfassend
- einen Datenbuskoppler (1) mit einem Primär-Busanschluss (P) für einen Primär-Bus (2) und einer Mehrzahl von Sekundär-Busanschlüssen (S1,S2,..,S_{N}) für den Anschluss je eines Endgerätes (F1,F2,..,F_{N}),
- mindestens ein angeschlossenes Endgerät (F1),
- eine an den Primär-Bus (2) angeschlossene Station (101) zur Konfiguration und zur Inbetriebnahme des Feldbussystems (100),
wobei der Datenbuskoppler (1) eine Abfrageeinheit (40) aufweist, welche ausgestaltet ist zu den an den Sekundär-Busanschlüssen (S1,S2,..,S_{N}) angeschlossenen Endgeräten (F1,F2,..,F_{N}) eine Abfrageverbindung (C2) aufzubauen und mittels eines Abfragebefehls (RQ), welcher einen Selektionsparameter (50) aufweist, zumindest ein erstes Geräteprofil (51,52,53,54) eines an den Sekundär-Busanschluss (S1,S2,..,S_{N}) angeschlossenen Endgerätes (F1,F2,..,F_{N}) abzufragen und in einem Speicherbaustein (41) auf dem Datenbuskoppler (1) abzuspeichern.

2. Feldbussystem (100) nach Anspruch 1, wobei die Abfrageeinheit (40) weiterhin ausgestaltet ist den Selektionsparameter (50) zu inkrementieren und mit dem derart veränderten Selektionsparameter (50) einen erneuten Abfragebefehl (RQ) an das Endgerät (F1,F2,..,F_{N}) zu richten um ein möglicherweise vorhandenes zweites Geräteprofil (51,52,53,54) des Endgerätes (F1,F2,..,F_{N}) zu erhalten, weiterhin ausgestaltet für den Fall, dass ein zweites Geräteprofil (S1,S2,..,S_{N}) vorhanden ist auch dieses in dem Speicherbaustein (41) zu speichern, wobei der Selektionsparameter (50) solange inkrementiert und ein erneuter Abfragebefehl an das Endgerät (F1,F2,..,F_{N}) gerichtet wird, bis eine Antwort (RS) auf den Abfragebefehl (RQ) ergibt, dass kein weiteres Geräteprofil (51,52,53,54) in dem Endgerät (F1,F2,..,F_{N}) eingetragen ist.

3. Feldbussystem (100) nach Anspruch 1 oder 2, wobei die Abfrageeinheit (40) weiterhin ausgestaltet ist eine Versionsnummer aus dem Endgerät (F1,F2,..,F_{N}) auszulesen und in Abhängigkeit von der Versionsnummer einen Eintrag in den Speicherbaustein (41) hinsichtlich einer Geräteprofil-Version-Unterstützung anzulegen.

4. Feldbussystem (100) nach einem der Ansprüche 1 bis 3, wobei die Station (101) eine aktuelle Bibliothek (60) von möglichen Geräteprofilen aufweist, wobei die Station (101) weiterhin ausgestaltet ist den Inhalt des Speicherbausteins (41) zu kopieren und anhand der Informationen aus dem Speicherbaustein (41) und der Information aus der Bibliothek (60) in einem Konfigurationseditor (70) der Station (101) ein Symbol (71,72,73) des jeweiligen Endgerätes (F1,F2,..,F_{N}) zu erstellen, wobei dem Symbol (71,72,73) ein Auswahlmenü zugeordnet ist, in welchen ein Anwender aus den das Endgerät (F1,..,F_{N}) unterstützenden Geräteprofilen wählen kann.

5. Feldbussystem (100) nach einem der Ansprüche 1 bis 4, wobei der Datenbuskoppler (1) weiterhin folgendes aufweist,
- eine Slave-Einheit (10), welche mit dem Primär-Busanschluss (P) in Verbindung steht, und
- eine Master-Einheit (11), welche an die Sekundär-Busanschlüsse (S1,S2,..,S_{N}) anschaltbar ist und welche ausgestaltet ist an die Sekundär-Busanschlüsse (S1,S2,..,S_{N}) Telegramme abzusetzen,
- eine Steuereinheit (12),
- ein Kommunikations-Schaltmittel (K1,K2,..,K_{N}) pro Sekundär-Busanschluss (S1,S2,..,S_{N}), welches den jeweiligen Sekundär-Busanschluss (S1,S2,..,S_{N}) mit der Master-Einheit (11) verbindet oder von der Master-Einheit (11) trennt, wobei die Steuereinheit (12) ausgestaltet ist die Kommunikations-Schaltmittel (K1,K2,..,K_{N}) bezüglich des Verbindens oder des Trennens zu steuern,
wobei die Steuereinheit (12)
- einen Befehlsausgang (12a) aufweist und ausgestaltet ist über den Befehlsausgang (12a) der Master-Einheit (11) eine geplante Anfrage (X) der Steuereinheit (12) an einen bestimmbaren Sekundär-Busanschluss (S1,S2,..,S_{N}) mit zu teilen, wobei die Steuereinheit (12) weiterhin
- einen Telegrammauswerte-Eingang (12b) aufweist, welcher mit der Master-Einheit (11) verbunden ist, und die Steuereinheit (12) ausgestaltet ist die von der Master-Einheit (11) abgesetzten Telegramme mitzulesen und die Telegramme auf die geplante Anfrage (X) hin zu untersuchen, weiterhin ist die Steuereinheit (12) ausgestaltet zu dem Zeitpunkt des Absendens der Anfrage (X) durch die Master-Einheit (11) die Kommunikations-Schaltmittel (K1,K2,..,KN) zu steuern.

6. Feldbussystem (100) nach Anspruch 5, wobei die Steuereinheit (12) weiterhin ausgestaltet ist, dass die zum angefragten Sekundär-Busanschluss (S1,S2,..,S_{N}) zugehörigen Kommunikations-Schaltmittel (K1,K2,...,K_{N}), derart gesteuert werden, dass es den in der Anfrage (X) bestimmten zugehörigen Sekundär-Busanschluss (S1,S2,..,S_{N}) an die Master-Einheit (11) anschaltet und die übrigen Kommunikations-Schaltmittel (K1,K2,..,K_{N}) derart steuert, dass die Master-Einheit (11) von den in der Anfrage (X) nicht bestimmten Sekundär-Busanschlüssen (S1,S2,..,S_{N}) getrennt wird.

7. Feldbussystem (100) nach Anspruch 5 oder 6 mit einem Versorgungs-Schaltmittel (V1,V2,..,V_{N}) pro Sekundär-Busanschluss (S1,S2,..,S_{N}), wobei die Steuereinheit (12) weiterhin ausgestaltet ist die Versorgungs-Schaltmittel (V1,V2,..,V_{N}) derart anzusteuern, dass eine Versorgungsspannung an die Sekundär-Busanschlüsse (S1,S2,..,S_{N}) einzeln schaltbar ist.

8. Feldbussystem (100) nach Anspruch 7, mit einer Diagnose-Einheit (13), welche mit der Steuereinheit (12) in Verbindung steht und ausgestaltet ist ein Anschließen eines Endgerätes (F1,F2,..,F_{N}) an einen Sekundär-Busanschluss (S1,S2,..,S_{N}) zu erkennen, wobei die Steuereinheit (12) dazu ausgestaltet ist vor einem möglichen Erkennen alle Versorgungs-Schaltmittel (V1,V2,..,V_{N}) so zu steuern, dass die Versorgungsspannung an die Sekundär-Busanschlüsse (S1,S2,..,S_{N}) angeschaltet ist.

9. Feldbussystem (100) nach Anspruch 8, wobei die Diagnose-Einheit (13) weiterhin dazu ausgestaltet ist ein Trennen eines Endgerätes (F1,F2,...,F_{N}) von einem Sekundär-Busanschluss (S1,S2,..,S_{N}) zu erkennen, wobei die Steuereinheit (12) dazu ausgestaltet ist quasi zeitgleich die zugehörigen Kommunikations-Schaltmittel (K1,K2,..,K_{N}) derart zu steuern, dass die Master-Einheit (11) von den zugehörigen Sekundär-Busanschlüssen (S1,S2,..,S_{N}) getrennt ist.

10. Verfahren zur Konfiguration und zur Inbetriebnahme eines Feldbussystems (100) nach einem der Ansprüche 1 bis 9, wobei in dem Datenbuskoppler (1) eine Abfrageeinheit (40) derart betrieben wird, dass sie zu den an den Sekundär-Busanschlüssen (S1,S2,..,S_{N}) angeschlossenen Endgeräten (F1,F2,..,FN) eine Abfrageverbindung aufbaut und mittels eines Abfragebefehls, welcher einen Selektionsparameter (50) aufweist, zumindest ein erstes Geräteprofil (51,52,53,54) eines an den Sekundär-Busanschluss (S1,S2,..,S_{N}) angeschlossenen Endgerätes (F1,F2,..,F_{N}) abfragt und in einem Speicherbaustein (41) auf dem Datenbuskoppler (1) abspeichert.

11. Verfahren nach Anspruch 10, wobei durch die Abfrageeinheit (40) der Selektionsparameter (50) inkrementiert wird und mit dem derart veränderten Selektionsparameter (50) ein erneuter Abfragebefehl (C2) an das Endgerät (F1,F2,..,F_{N}) gerichtet wird um ein möglicherweise vorhandenes zweites Geräteprofil (51,52,53,54) des Endgerätes (F1,F2,..,F_{N}) zu erhalten, weiterhin wird durch die Abfrageeinheit (40) für den Fall das ein zweites Geräteprofil (F1,F2,..,F_{N}) vorhanden ist auch dieses in dem Speicherbaustein (41) gespeichert, wobei der Selektionsparameter (50) solange inkrementiert und ein erneuter Abfragebefehl an das Endgerät (F1,F2,..,F_{N}) gerichtet wird, bis eine Antwort (RS) auf den Abfragebefehl (RQ) ergibt, dass kein weiteres Geräteprofil (51,52,53,54) in dem Endgerät (F1,F2,..,F_{N}) eingetragen ist.

12. Verfahren nach Anspruch 11, wobei in der Station (101) eine aktuelle Bibliothek (60) von möglichen Geräteprofilen vorgehalten wird, wobei von der Station (101) aus der Inhalt des Speicherbausteins (41) kopiert wird und anhand der Informationen aus dem Speicherbaustein (41) und der Information aus der Bibliothek (60) in einem Konfigurationseditor (70) der Station (101) ein Symbol (71,72,73) des jeweiligen Endgerätes (F1,F2,..,F_{N}) erstellt wird, wobei dem Symbol (71,72,73) ein Auswahlmenü zugeordnet wird, in welchen ein Anwender aus den das Endgerät (F1,..,F_{N}) unterstützenden Geräteprofilen wählen kann.
